# EUROPÄISCHE PATENTSCHRIFT

(11) **EP 1 213 338 B1**
(45) Veröffentlichungstag und Bekanntmachung des Hinweises auf die Patenterteilung: **23.07.2003**
(21) Anmeldenummer: 01126428.0
(22) Anmeldetag: 08.11.2001
(51) Int. Cl.: C09K 19/38, C09K 19/58, C09B 67/00, C09D 5/36

(54) **Verfahren zur Herstellung von Plättchen**
Methods for preparing flakes
Methode de preparation de plaque

(30) Priorität: 16.11.2000 DE 10056844; 23.05.2001 DE 10125358
(43) Veröffentlichungstag der Anmeldung: 12.06.2002
(73) Patentinhaber: Consortium für elektrochemische Industrie GmbH, 81379 München (DE)
(72) Erfinder: Leigeber, Horst, 82041 Oberhaching (DE); Kreuzer, Franz-Heinrich, Dr., 82152 Planegg (DE); Gurtner, Adolf, 4933 Wildenau (AT); Stanjek, Volker, Dr., 81479 München (DE)
(74) Vertreter: Potten, Holger

(56) Entgegenhaltungen:
- WO-A-98/38255
- DE-A- 4 240 743
- DE-A- 19 757 699
- DE-A- 19 917 067
- US-A- 3 138 475
- US-A- 5 364 557

## Beschreibung

Die Erfindung betrifft ein Verfahren zur Herstellung von Plättchen einer Dicke von 0,2 - 1000 µm und eines Durchmessers von 0,5 - 10 000 µm.

Derartige Plättchen kommen in der Natur als Schuppen, Fischsilber oder Glimmerplättchen vor und werden als solche oder in oberflächenmodifizierter Form als Effektpigmente eingesetzt. Daneben sind künstliche Effektpigmente bekannt, die beispielsweise aus dünnen Plättchen cholesterischer Flüssigkristalle bestehen. Weiterhin finden solche Plättchen beispielsweise als rheologische Additive breite Anwendung.

In WO 93/08237, DE 196 18 563 A1, DE 196 18 566 A1 und DE 197 07 805 A1 ist die Herstellung von Interferenzpigmenten beschrieben, die aus hoch- und niedrigbrechenden, gegebenenfalls gefärbten oder vollkommen absorbierenden Schichten sowie Metallschichten bestehen. Die Herstellung dieser Interferenzpigmente erfolgt durch das Auftragen eines Materials oder mehrerer Materialien des Interferenzpigmentes auf ein Trägermaterial und anschließendes Ablösen der aus einem Material oder mehreren Materialien des Interferenzpigmentes bestehenden Schicht. Diese Schicht darf sich, auch wenn sie aus einzelnen Subschichten aufgebaut ist, beim Ablösen und den anschließenden Verarbeitungsschritten nicht in die Subschichten trennen, da hierdurch die charakteristischen Eigenschaften des Interferenzpigmentes verloren gehen. Eine Subschicht ist somit ein integraler Bestandteil eines gemäß Stand der Technik hergestellten Plättchens.

Wenn die Materialien zur Herstellung der Schicht eine geringe Festigkeit haben, kann die Materialschicht von dem Trägermaterial nicht vollflächig abgezogen werden ohne zu reißen, sondern sie muß einem abrasiven Verfahren unterworfen werden. Speziell bei dünnen Schichten unter 10 µm ist dieser Verfahrensschritt kostenintensiv und mit Verschleißproblemen des Trägermaterials verbunden, insbesondere wenn es sich um eine als Trägermaterial allgemein übliche Terephthalatfolie (DE 196 18 566 A1, DE 197 07 805 A1) handelt. Um dieses Problem zu vermeiden, ist bekannt, Trennmittel auf das Trägermaterial aufzutragen, ehe das Material oder die Materialien, die das Interferenzpigment bilden, aufgetragen werden. Diese Vorgehensweise eignet sich hervorragend, wenn spröde Materialien das Interferenzpigment bilden. Es treten aber erhebliche Probleme auf, wenn es sich um Materialien mit hoher Bruchdehnung und geringer Reißfestigkeit handelt. Sie sind dann einerseits äußerst schwierig in Bruchstücke zu überführen, die durch Preßluft oder einen Absaugvorgang vom Trägermaterial entfernt werden können, andererseits sind sie nicht fest genug, um unbeschadet als Film vom Träger gelöst zu werden.

US 5,364,557 offenbart die Herstellung dünner cholesterischer Plättchen durch Auftragen einer cholesterischen Schicht auf ein Trägermaterial, z.B. auf eine Folie mittels eines Auftragswerkes, bestehend aus einer Rakel oder einem Walzenauftragswerk. Bei schmelzbaren Materialien erfolgt der Auftrag oberhalb der Schmelz- oder Glastemperatur des Materials. Anschließend wird das Material unterhalb der Schmelz- oder Glastemperatur vom Substrat mit einem Luftstrahl, der gegebenenfalls ein abrasives Pulver enthält, oder aber mit einem Schaber entfernt. Als spezielle Ausführungsform wird die Übertragung auf ein weiteres Trägermaterial beschrieben. Weiterhin wird die Erzeugung von Schichten, die aus Stoffen mit unterschiedlichen Eigenschaften bestehen, offenbart. So werden Doppelschichten, bestehend aus links- und rechtshelikalem Material, beschrieben, die beim Zerkleinerungsvorgang Plättchen liefern, die sowohl aus einer links- und als auch aus einer rechtshelikalen Schicht bestehen und beim Zerkleinerungsvorgang nicht in weitere Schichten zerfallen.
Alle in US 5,364,557 offenbarten Verfahrensweisen führen zu einer einzigen ggf. aus Subschichten aufgebauten Schicht, aus welcher durch Brechen Plättchen gewonnen werden, welche die Dicke der dem Mahlvorgang unterworfenen Schicht besitzen.

Auch DE 42 40 743 (entspricht US 5,362,315) offenbart die Herstellung vernetzter cholesterischer Plättchen über Einfachschichten.

Gemäß EP 07 93 693 erfolgt die Herstellung vernetzter cholesterischer Plättchen durch Bedrucken eines Trägers mit cholesterischem Material, durch Vernetzen und durch anschließendes Entfernen des aufgedruckten, vernetzten Materials. Auch hier geht man von einer einzelnen Schicht aus, die dem letztendlich erhaltenen cholesterischen Plättchen entspricht.

DE 197 57 699 offenbart ein Verfahren zur Herstellung plättchenförmiger, cholesterischer Mehrschichtinterferenzpigmente, gekennzeichnet durch die Schichtfolgen A1-B-A2, wobei A1 und A2 unterschiedlich sein können, jedoch mindestens eine cholesterische Schicht umfassen und B für eine trennende Zwischenschicht steht, die das die Schichten A1 und A2 transmittierende Licht teilweise oder vollständig absorbiert. Die offenbarten Mehrschichtpigmente haben einen Durchmesser von 5 bis 500 µm. Die Schichtdicken der einzelnen cholesterischen Schichten A1 oder A2 betragen 0,5 bis 20 µm, während die Schichtdicke jeder einzelnen Schicht B 0,2 bis 5 µm beträgt.

Alle genannten Verfahren sind abhängig von der Leichtigkeit, mit welcher der vernetzte oder unterhalb der Glastemperatur befindliche Film vom eingesetzten Substrat abgelöst werden kann. Je fester der cholesterische Film auf dem Trägermaterial haftet, desto größerer mechanischer Beanspruchung muß das Trägermaterial beim Ablösen der cholesterischen Schicht ausgesetzt werden. Dies führt zu hohem Verschleiß des Trägermaterials und damit zu erhöhten Produktionskosten für die cholesterischen Filme. Besonders drastisch treten Probleme auf, wenn Schichten unter 10 µm Dicke, bestehend aus einem nicht spröden Material, abgelöst werden müssen.

Aufgabe der Erfindung ist es daher, ein Verfahren bereitzustellen, das es ermöglicht, auch aus Materialien mit hoher Reißdehnung und geringer Reißfestigkeit ohne die genannten Probleme Plättchen einer Dicke von 0,1-1000 µm und eines Durchmessers von 0,5 -10 000 µm herzustellen.

Diese Aufgabe wird gelöst durch ein Verfahren, bei dem ein zu Plättchen zu verarbeitendes Material in fließfähigem oder gasförmigem Zustand auf einen Träger aufgetragen, verfestigt, von dem Träger entfernt und einem Brech- oder Mahlprozeß unterzogen wird, dadurch gekennzeichnet, daß das Material auf den Träger derart übereinander aufgetragen wird, daß nach dem Auftragen ein Schichtpaket vorliegt, welches im Querschnitt senkrecht zu seiner Oberfläche Einzelschichten einer Dicke zwischen 0,2 - 1000 µm enthält, wobei die Festigkeit des Schichtpakets parallel zum Schichtverlauf größer ist, als senkrecht zum Schichtverlauf, und dieses Schichtpaket nach Ablösen von dem Träger derart behandelt wird, daß das Material in Einzelschichten zerfällt und die Einzelschichten auf eine Teilchengröße von 0,5 - 10000 µm zerkleinert werden.

Ein Schichtpaket wird vorzugsweise dadurch erhalten, daß unverfestigtes, zu Plättchen zu verarbeitendes Material, zunächst in üblicher Weise auf einen Träger aufgebracht und verfestigt wird und anschließend auf dieses verfestigte Material wiederum unverfestigtes zu Plättchen zu verarbeitendes Material aufgebracht und verfestigt wird, ohne daß es dabei zu einem Verschweißen oder Blocken der einzelnen Materialschichten miteinander kommt. Hierfür geeignete Prozeßschritte sind beispielsweise das Auftragen und Polymerisieren oder Vernetzen polymerisierbarer oder vernetzbarer Materialien auf eine bereits polymerisierte oder vernetzte Schicht oder das Aufbringen einer Schmelze auf erstarrtes, kaltes Material.

Gegebenenfalls wird das Schichtpaket unter Verwendung eines Trennmittels erzeugt. Dabei wird auf eine verfestigte Materialschicht vor dem Auftrag einer unverfestigten Materialschicht ein Trennmittel aufgetragen. Der Auftrag des Trennmittels kann zwischen jeder Einzelschicht oder jeweils nach einer bestimmten Anzahl von Schichten erfolgen. Zur Herstellung mehrschichtiger Plättchen wird das Trennmittel jeweils nach der Anzahl von Schichten (Subschichten), die nach dem Zerkleinern ein mehrschichtiges Plättchen bilden, aufgetragen. Im Sinne der vorliegenden Erfindung handelt es sich auch bei einem solchen mehrschichtigen flächenhaften Gebilde, welches beim Ablösen vom Träger und beim Mahlprozess nicht in Einzelschichten (Subschichten) zerfällt, um eine Einzelschicht. Eine Einzelschicht im Sinne der vorliegenden Erfindung kann daher durchaus, wie auch aus dem Stand der Technik bekannt, aus mehreren Subschichten, die miteinander untrennbar verbunden sind, bestehen.

Das Schichtpaket wird vorzugsweise durch zwei- oder mehrmaliges Auftragen und Verfestigen des zu verarbeitenden Materials, welches eine Einzelschicht bildet, hergestellt. Bevorzugt besteht ein Schichtpaket aus mehr als 6 Einzelschichten, besonders bevorzugt aus mehr als 10 Einzelschichten.

Nach dem Aufbau des aus mindestens zwei Einzelschichten bestehenden Pakets wird dieses vom Träger entfernt, wobei eine erste Schicht des Materials auf dem Träger verbleiben kann, und dann einem Brech- und/oder Mahlwerk zugeführt.

Als Träger, auf den die erste Schicht des zu Plättchen zu verarbeitenden Materials aufgetragen wird, eignet sich jedes Material, das bei der Verfestigungstemperatur des aufzutragenden Materials fest ist. Dies sind beispielsweise Metalle wie Eisen, Stahl, legierte Stähle, Messing, Chrom, Kupfer oder Kunststoffe wie gesättigte Polyester (PET), Polyethylen (PE), Polypropylen (PP), Polystyrol (PS), vernetzte ungesättigte Polyester, Polytetrafluorethylen (Teflon), Polyimide und Polyamide sowie anorganische oxidische und nichtoxidische Werkstoffe wie Porzellan, Siliciumcarbid, Wolframcarbid, Borcarbid, Siliciumnitrid, Mischkeramiken, Granit und Glas oder Kombinationen dieser Werkstoffe in Form beschichteter Werkstoffe oder aus ihnen hergestellte Verbundwerkstoffe.

Als Träger können platten-, zylinder-, röhren- oder bandförmige Körper gewählt werden. Ihre Oberflächen können rauh, geschliffen, poliert, oberflächenvergütet und / oder mit einer Trennschicht versehen sein. Vorzugsweise handelt es sich um zylinderförmige Körper oder Körper, die gegebenenfalls konisch oder parabolisch ausgebildet sind.

Materialien, die im erfindungsgemäßen Verfahren eingesetzt werden können, sind vernetzbare Materialien oder Stoffe, die aus der flüssigen in eine feste Phase übergeführt werden können, sei es durch Erstarren einer Schmelze, sei es durch Verdampfen eines Lösungsmittels, sei es durch Kristallisation oder eine Vernetzungsreaktion.

Beispiele für solche Materialien sind gesättigte und ungesättigte Polyester, Epoxide, Vinylester, Vinyläther, Polyurethane, Silane, Siloxane, Silanolate, Wasserglas, Kieselsäureester, flüssigkristalline, polymerisierbare oder vernetzbare aromatische, cycloaliphatische oder heterocyclische Verbindungen wie Epoxide mit den Amino-, Hydroxy- oder Anhydridkomponenten, Vinylester, Vinyläther, Isocyanate als solche oder mit den entsprechenden HO-Komponenten in monomerer oder oligomerer Form, Silane oder Siloxane. Weiterhin sind verfilmende Dispersionen und Harzlösungen zu nennen, die vernetzbare oder nichtvernetzbare Harze enthalten.

Vorzugsweise handelt es sich um polymerisierbare, vernetzbare, flüssigkristalline, nematische, smektische, chiral nematische und chiral smektische Materialien. Vorzugsweise haben die Materialien eine cholesterische Phase.

Die Materialien können rein oder in Kombination mit anderen Stoffen wie beispielsweise Hilfsstoffen oder Wirkstoffen eingesetzt werden. Hilfsstoffe sind z.B. Füllstoffe, Farbstoffe, Pigmente oder Initiatoren für radikalische oder ionische Polymerisationen, für Polyadditionen, Kondensationen oder für Hydrosilylierungen.

Die Wirkstoffe können gelöst oder als zweite Phase im Material vorliegen. Es handelt sich z.B. um Pharmazeutika, Herbizide oder Pestizide.

Die Materialien können auch in dispergierter Form Flüssigkeiten enthalten, z.B. niedermolekulare flüssigkristalline Substanzen, die in üblicher Weise z.B. durch Anlegen elektrischer Felder in den Plättchen geschaltet werden können.

Die zweite Phase kann in der Matrix des einzusetzenden Materials bereits vor Durchführung des erfindungsgemäßen Verfahrens vorliegen oder sie kann während des erfindungsgemäßen Verfahrens durch Phasenseparation entstehen.

Darüber hinaus können verfilmende Dispersionen, Suspensionen, Pulverlacke oder vergleichbare Systeme sowie durch Sputtern oder Verdampfen aufbringbare Stoffe als Ausgangsmaterialien im erfindungsgemäßen Verfahren eingesetzt werden.

Beispielsweise handelt es sich dabei um polymerisierbare, polyaddierbare, hydrosilylierbare, polykondensierbare, vernetzbare Stoffe, schmelzbare Harze, Thermoplaste, durch Verdampfen von Lösemitteln in Filme überführbare Lösungen, Suspensionen und durch Polymerisation in Zweiphasensysteme überführbare Mischungen, die gegebenenfalls Hilfsstoffe wie Photoinitiatoren, Peroxide, UV-Absorber, Farbstoffe oder Pigmente enthalten.

Der Aufbau des Schichtpakets kann mit einem oder mit mehreren der genannten Materialien erfolgen. Voraussetzung für das erfolgreiche Durchführen des erfindungsgemäßen Verfahrens ist, daß die Festigkeit des Schichtpakets parallel zum Schichtverlauf größer ist als senkrecht zu den Schichten.

Der Aufbau eines Schichtpakets aus den genannten Materialien kann ohne oder mit einem Trennmittel durchgeführt werden. Als Trennmittel können Verbindungen, ausgewählt aus der Gruppe der Silicone, außerdem Tenside, Polyether, Polyvinylalkohol (PVA), hochdisperse Kieselsäure (HDK), Talkum, Teflonpulver, Graphit, Molybdänsulfid, Glimmerpulver und Metallplättchen (z.B. Al oder Messing) eingesetzt werden.

Die Trenneigenschaften des Trennmittels können unmittelbar nach der Entfernung des Schichtpakets vom Träger wirksam sein oder aber beispielsweise bei einem Schichtpaket aus anorganischem Material in einem nachfolgenden Kalzinierungsschritt wirksam werden. Dies kann beispielsweise im Fall eines organische Trennschichten enthaltenden Schichtpakets durch Kalzinieren in oxidierender Atmosphäre über 150°C oder durch Aufblähen einer beispielsweise Wasser, CO₂ oder N₂ abspaltenden Trennschicht geschehen.

Der gleiche Effekt wie durch das Aufbringen eines Trennmittels zwischen den einzelnen Schichten läßt sich mit vernetzbaren Materialien dadurch erzeugen, daß die Schichten aus vernetzbaren Materialien, deren Trennung zunächst unerwünscht ist, nur schwach vernetzt werden, die Schicht, an welcher die Trennung erfolgen soll, jedoch stark vernetzt wird.

Der Auftrag der Materialien kann durch verschiedene Verfahren erfolgen. Beispielhaft seien Auftragsmöglichkeiten durch Walzen, Rakeln, Sprühen in flüssiger Form mit oder ohne Lösungsmittel oder in Form von Pulvern gemäß den bekannten Pulvertechnologien genannt sowie Aufdampfen und Sputtern. Der Auftrag kann mit einem oder mehreren Auftragswerken geschehen, wobei das Material bzw. die Materialien jeweils zwischen den Auftragswerken in die gewünschte feste Form übergeführt werden muß/müssen. Dies geschieht je nach Material in bekannter Art und Weise durch Trocknen, Polymerisieren, Vernetzen oder Kühlen. Die Schichtpakete können gegebenenfalls unter Verwendung von Glättungselementen erzeugt werden.

Wenn es sich bei den zu Plättchen zu verarbeitenden Materialien um flüssigkristalline Materialien handelt, so erfolgt der Schichtaufbau vorzugsweise in Gegenwart von Flüssigkristalle orientierenden Hilfsstoffen oder elektrischen oder magnetischen Feldern. Entsprechende Verfahren sind aus dem Stand der Technik bekannt. Bei solchen Materialien erfolgt der Aufbau des Schichtpakets vorzugsweise ohne den Einsatz eines Trenmittels.

Nach Aufbau einer Schichtabfolge im gewünschten Umfang wird das Schichtpaket vom Träger gelöst und einem Zerkleinerungsprozeß unterworfen.

Das Ablösen des Schichtpakets kann dabei auch durch Abtragen von Schichten auf der dem Auftragswerk gegenüberliegenden Seite erfolgen. Das Abtragen erfolgt vorzugsweise kontinuierlich.

Der Zerkleinerungsprozeß kann beispielsweise in einem Kollergang, einer Kugelmühle, einer Stiftmühle oder einer Luftstrahlmühle durchgeführt und das Material anschließend klassiert werden.

Das erfindungsgemäße Verfahren kann auch dergestalt durchgeführt werden, daß Materialien mit unterschiedlichen Eigenschaften unmittelbar nacheinander aufeinander aufgebracht werden, mit der Maßgabe, daß diese miteinander fest verbundenen Doppeloder Mehrfachschichten die Einzelschichten des entstehenden Schichtpakets darstellen, die beim Mahlprozeß die gewünschten Plättchen mit der gewünschten Schichtabfolge liefern.

Mittels des erfindungsgemäßen Verfahrens lassen sich daher auch Plättchen mit Schichtaufbau realisieren. So lassen sich verschiedene Materialkombinationen z. B. AB, ABA, ABC usw. (A = Material 1, B = Material 2, C = Material 3) erzeugen. Beispielsweise können Doppel-, Dreifach- oder n-fach Schichten aus cholesterischen Flüssigkristallen mit jeweils unterschiedlichen Reflexionswellenlängen oder unterschiedlicher Helizität erhalten werden. Auch Kombinationen von cholesterischen Schichten mit planar orientierten nematischen Schichten, die linear polarisiertes Licht reflektieren, oder Kombinationen von cholesterischen Schichten mit homeotrop orientierten nematischen oder smektischen Schichten sind möglich.

Im Folgenden werden beispielhaft weitere Eigenschaftskombinationen in den Plättchen genannt, die durch das erfindungsgemäße Verfahren realisiert werden können: Hohe / niedrige Dielektrizitätskonstante; hohes / niedriges el. Dipolmoment; hohe / niedrige el. oder optische Polarisierbarkeit; hoher / niedriger Brechungsindex; doppelbrechend / isotrop; transparent / streuend; transparent / absorbierend; streuend / absorbierend; hydrophil / hydrophob; lipophil / lipophob; el. leitend / nicht leitend; hoher / niedriger el. Widerstand; ionisch / neutral; anionisch / kationisch; magnetisch / nicht magnetisch; magnetisierbar / nicht magnetisierbar; quellbar / nicht quellbar; nur in org. Lösungsmitteln quellbar / nur in Wasser quellbar.

Die erfindungsgemäß hergestellten Plättchen können weiteren Prozeßschritten wie beispielsweise dem Beschichten mit Metallen und Metalloxiden zugeführt werden.

Eine Variante des erfindungsgemäßen Verfahrens läßt sich beispielsweise durch Modifizierung des in DE 42 40 743 A1 beschriebenen Verfahrens verwirklichen. Gemäß DE 42 40 743 A1 wird die Vernetzungsreaktion des zu Plättchen zu verarbeitenden Materials zwischen zwei Folien, einer Träger- und Deckfolie ausgeführt. Dieses Verfahren wird dadurch zum erfindungsgemäßen Verfahren modifiziert, daß die erste, zwischen Träger- und Deckfolie befindliche Schicht von der Deckfolie befreit wird und die Schicht mit der Trägerfolie einem oder mehreren weiteren Beschichtungsschritten analog der Beschichtung des Trägers unterworfen wird. Ein auf diese Weise hergestelltes Schichtpaket in Form eines Schichtstapels läßt sich von dem Träger erheblich besser ablösen als eine Einfachschicht.In dieser erfindungsgemäßen Verfahrensvariante wird die Trägerfolie ohne Trennmittel oder Trennschicht eingesetzt.

Diese Variante des erfindungsgemäßen Verfahrens arbeitet sowohl bezüglich des Materialauftrags als auch bezüglich der Gewinnung des Schichtpakets diskontinuierlich. Sie kann jedoch durch Einsatz von Endlosträgern und mehrfach hintereinandergeschalten Auftrags- und Härtungseinheiten, die zum Aufbau einer Mehrfachschicht führen, gefolgt von einer Ablöseeinheit, kontinuierlich gestaltet werden.

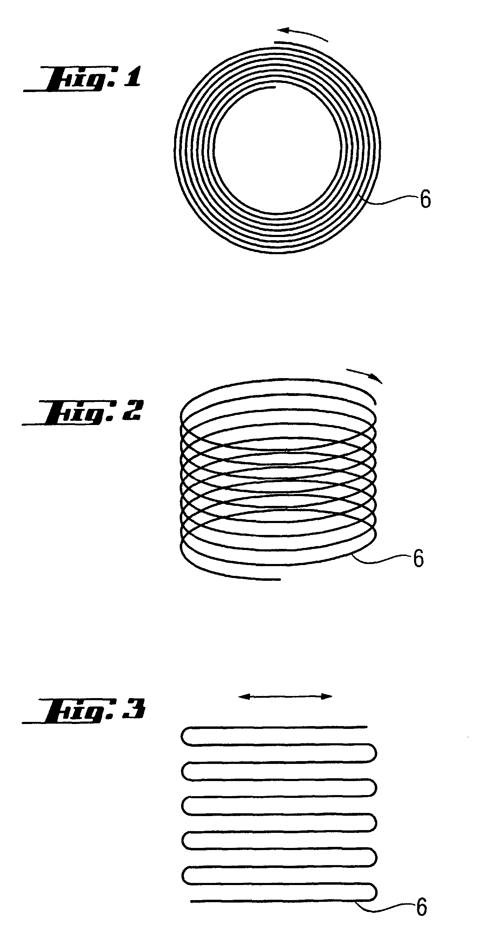

In Fig. 1 bis 3 sind beispielhaft weitere Arten des Materialauftrags für den Aufbau eines Schichtpakets, aus welchem Plättchen diskontinuierlich oder kontinuierlich gewonnen werden können, schematisch dargestellt, wobei der Materialauftrag kontinuierlich oder diskontinuierlich erfolgt. Die Pfeile geben die Richtung des Auftrags an.

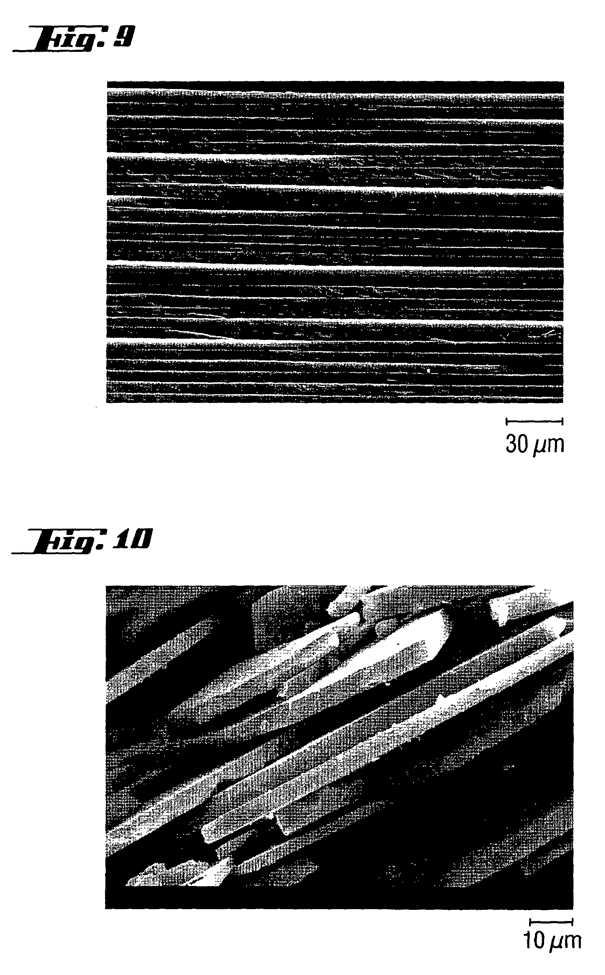

Der Auftrag des Materials gemäß Fig. 1 erfolgt beispielsweise auf der Außenseite eines rotierenden Zylinders als Träger mittels eines Auftragswerks. Schematisch ist dieser Vorgang in Fig. 4 a dargestellt. Analog ist der Auftrag auf die Innenseite eines Zylinders als Träger möglich. Ist die Umlaufzeit des unverfestigten Materials auf dem Zylinder größer als die zur Verfestigung benötigte Zeit, kann die Verfestigung kontinuierlich erfolgen und es entsteht ein rollenförmiges Schichtpaket. Ist die Umlaufzeit des unverfestigten Materials auf dem Zylinder geringer als die Verfestigungzeit, so erfolgt der Materialauftrag dikontinuierlich, nach Auftrag eines Zylinderumfangs unverfestigten Materials erfolgt die Verfestigung, nach der Verfestigung erfolgt der nächste Auftrag eines Zylinderumfangs unverfestigten Materials usw.. Es entsteht statt eines rollenförmigen Schichtpackets ein ringförmig aufgebautes Schichtpaket wie in Fig. 4b dargestellt. Der Auftrag des Materials auf der Innenseite eines Zylinders kann in der schon beschriebenen Weise erfolgen, er kann aber auch durch einen Spritzvorgang, gefolgt von Nivellierung des Materials durch die Zentrifugalbeschleunigung erfolgen.

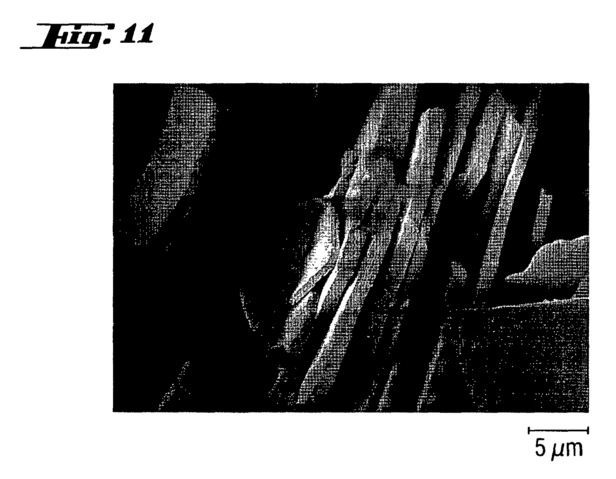

Der Aufbau einer Apparatur, welche zur Herstellung eines Schichtpakets in Form einer Rolle auf einem Zylinder aus mittels UV- Strahlung vernetzbaren Materials geeignet ist, ist in Fig. 5 dargestellt.

Das Material wird aus einem Materialreservoir (2) mit einem Walzenauftragswerk (3) auf einen rotierenden Zylinder (1) aufgetragen, mit einer zur Polymerisation erforderlichen UV-Strahlung ausreichend durchlässigen Folie (5) geglättet und mittels UV-Strahlung vernetzt(4). Nach der Vernetzung kann eine Trennhilfe aufgetragen werden oder bei flüssigkristallinen Materialien eine Orientierungshilfe(7), welche in einem nachgeschalteten Arbeitsgang, beispielsweise durch Reiben(8), vorbehandelt wird. Als Orientierungshilfe (7) können beispielsweise auch photochemisch erzeugte Orientierungschichten verwendet werden.

Die Folie (5) kann gegebenenfalls oberflächenbehandelt sein, sie kann beispielsweise eine Siliconschicht tragen. Die Folie (5) hat neben ihrer Glättungsfunktion die Aufgabe, Luftsauerstoff, der die Vernetzung negativ beeinflußt, von der zu vernetzenden Oberfläche fernzuhalten. Diese Aufgabe entfällt, wenn die Apparatur unter Inertgas betrieben wird.

Ist die gewünschte Schichtenanzahl erreicht, wird das spiralförmig aufgebaute Schichtpaket (6) vom zylindrischen Kern (1) entfernt und einem Mahlwerkzeug zugeführt.

Eine weitere Variante des Verfahrens ist in Fig. 6 dargestellt. Ein flexibler Träger (9) wird nach Verfahren, wie sie aus dem Stand der Technik bekannt sind, z.B. aus einem Materialreservoir (10) mit einem Auftragswerk (11) mit einem durch Strahlung (UV, Elektronenstrahl) vernetzbaren Material beschichtet. Der beschichtete flexible Träger (12) überträgt das Material kontinuierlich auf einen rotierenden, zylindrischen Kern (1). Dort wird das Material UV-vernetzt oder mittels Elektronenstrahl gehärtet (4). Dieses kontinuierliche Beschichtungsverfahren führt zu einem Schichtpaket in Form einer Rolle. Der von der Beschichtung befreite Träger (9) kann entweder als Endlosband ständig sofort wiederverwendet werden oder, wie in Fig. 6 dargestellt, von Rolle zu Rolle durchlaufen.

Der Schritt des Ablösens gestaltet die beschriebenen Verfahren diskontinuierlich. Er kann jedoch bei entsprechender Größe der Apparatur durch Verwenden mehrerer hintereinander geschalteter Auftrags- und Härtungseinheiten, die zum Aufbau der Mehrfachschichten führen, gefolgt von einer Ablöseeinheit, auch kontinuierlich gestaltet werden.

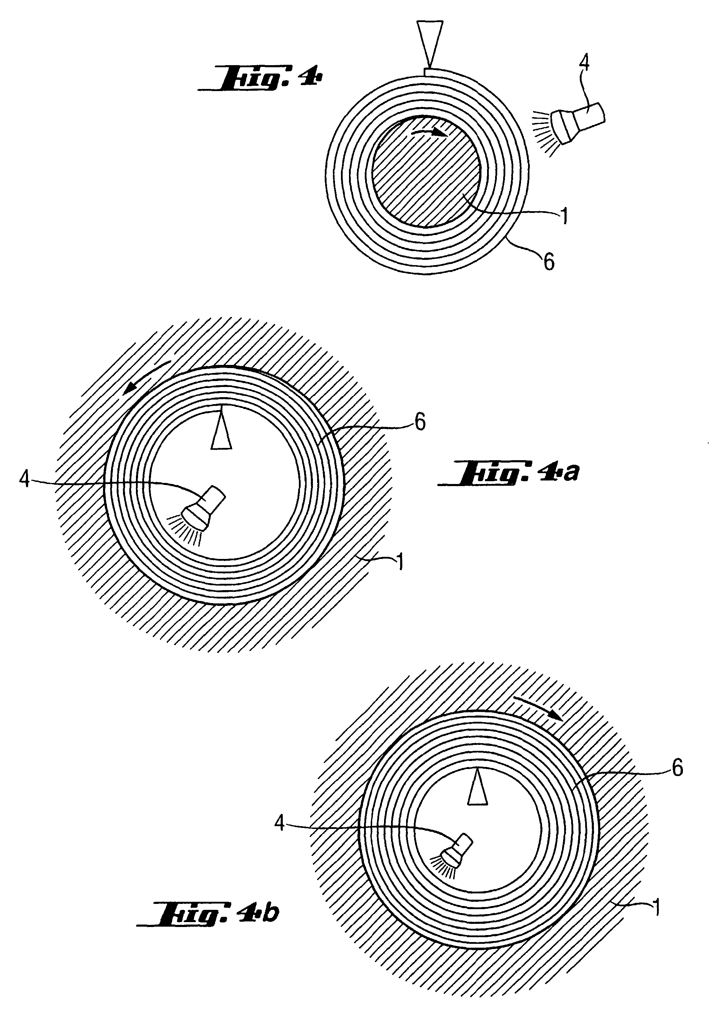

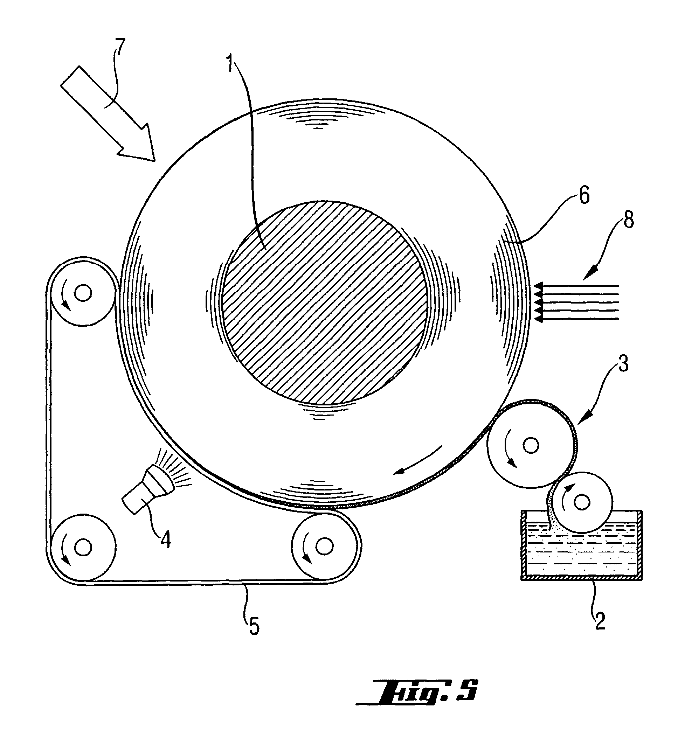

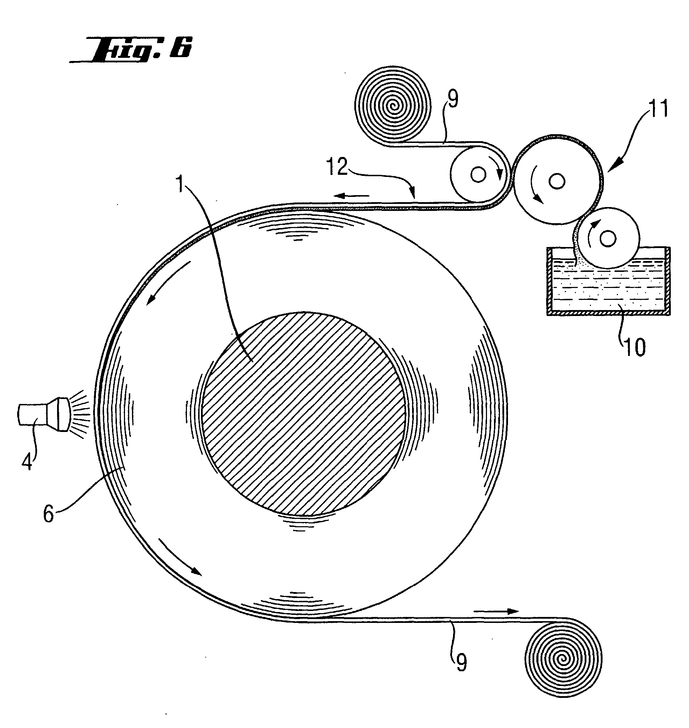

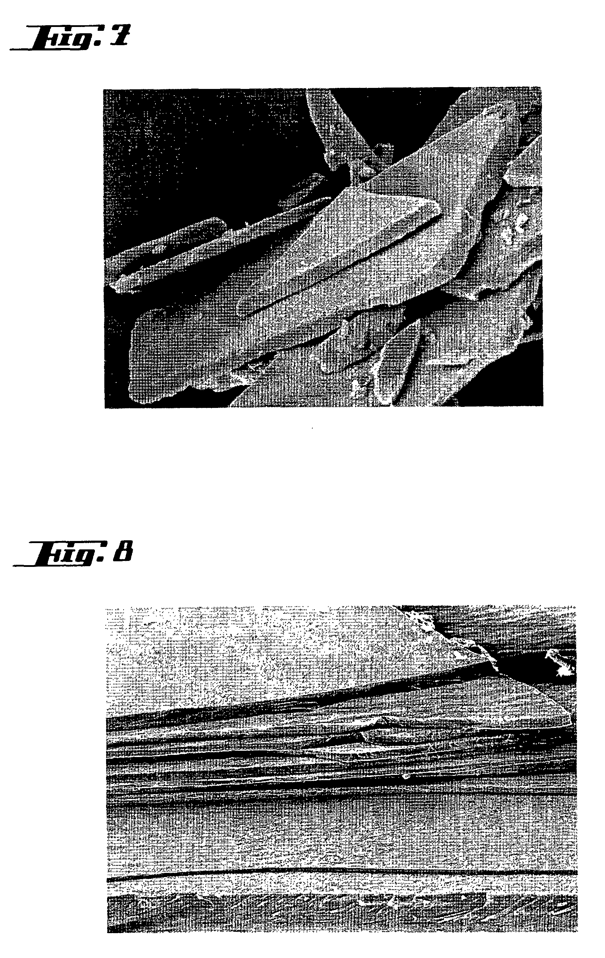

Auch die in Fig. 2 oder 3 dargestellte Auftragsweise des Materials auf einen Träger führt sehr einfach zu kontinuierlichen Prozessen.

Nach Fig. 2 wird ein Schichtpaket in Form einer Helix dadurch aufgebaut, daß sich ein Auftragswerk auf einer Kreisbahn über einem Träger bewegt und das aufgebrachte Material kontinuierlich in den festen Zustand übergeführt wird. Wird als Auftragswerk beispielsweise ein Walzenauftragswerk verwendet, so ist dieses zweckmäßigerweise konisch ausgebildet, um den gleichmäßigen Auftrag des Schichten bildenden Materials zu gewährleisten. Wird die Kreisbahn des Auftragswerkes in konstanter Arbeitshöhe gehalten, wächst das helikale Schichtpaket nach unten. Ohne den kontinuierlichen Zuwachs des Schichtpaketes zu unterbrechen, kann nach Entfernen des Trägers im gewünschten Abstand zur Arbeitsebene kontinuierlich oder absatzweise geschichtetes Material entfernt und einem Mahlprozeß zugeführt werden.

Fig. 3 zeigt schematisch den Aufbau eines Schichtpakets, vergleichbar einem Stapel Endlospapier. Diese Faltblattstruktur wird erhalten, wenn sich ein Auftragswerk über einem Träger in einer Ebene vorwärts und anschließend rückwärts bewegt und das aufgebrachte Material kontinuierlich in den festen Zustand übergeführt wird. Wird die Bewegungsebene auf konstanter Arbeitshöhe gehalten, wächst das gefaltete Schichtpaket nach unten. Ohne den kontinuierlichen Zuwachs des Schichtpaketes zu unterbrechen, kann nach Entfernen des Trägers im gewünschten Abstand zur Arbeitsebene kontinuierlich oder absatzweise geschichtetes Material entfernt und einem Mahlprozeß zugeführt werden.

Der Mahlprozeß verläuft wie aus dem Stand der Technik zur Herstellung von Plättchen der genannten Größe bekannt.

Die nach dem erfindungsgemäßen Verfahren erhaltenen Plättchen lassen sich als Pigmente, Effektpigmente, Substrate für Interferenzschichten, rheologische Additive, Gleitmittel, Wärmeschilde, Polarisatoren, elektrisch schaltbare Displays, Flammschutzmittel, elektroviskose Flüssigkeiten und Wirkstoffträger verwenden.

Die folgenden Beispiele dienen der weiteren Beschreibung der Erfindung.

### Beispiel 1: Herstellung von flüssigkristallinen Plättchen mit cholesterischer Struktur (Pigmenten) aus Mehrfachschichten unter Verwendung einer siliconisierten Deckfolie:

### Beispiel 1a: Aus einem Schichtpaket mit zwei Schichten

Gemäß dem in Beispiel 9 der deutschen Patentanmeldung DE 199 17 067 beschriebenen Verfahren werden zwei Mischungen aus vernetzbaren flüssigkristallinen Substanzen mit chiraler Phase (LC-Mischungen) hergestellt. Dabei wird die Farbe der ersten LC-Mischung (Mischung 1) durch eine entsprechende Konzentration des chiralen Dotierstoffes so eingestellt, daß ein aus nur einer Schicht bestehender Flüssigkristallfilm (LC-Film) bei orthogonaler Aufsicht eine rote Farbe aufweist. Die Farbe der zweiten LC-Mischung (Mischung 2) wird hingegen so eingestellt, daß ein analog hergestellter LC-Film bei orthogonaler Aufsicht eine grüne Farbe besitzt.

Aus der ersten LC-Mischung wird ein Flüssigkristallfilm hergestellt, indem man diese Mischung bei 100°C durch Rakelauftrag mit einer Schichtdicke von ca. 6 µm auf eine PET-Folie (Dicke = 50 µm, Type Hostaphan RN 50, zu beziehen von Fa. Pütz Folien, Taunusstein-Wehen) aufträgt. Auf die dabei erhaltene Schicht wird eine Deckfolie aufkaschiert, die auf der der LC-Schicht zugewandten Seite mit einer ca. 2 µm dicken vernetzten Siliconschicht versehen ist. Dabei orientiert sich die LC-Mischung zu einer stark reflektierenden cholesterischen Struktur. Die Siliconschicht besteht aus dreidimensional vernetztem Silicon (100 Teile Dehäsiv 920, 1 Teil Haftvermittler HF 86, 2,5 Teilen Crosslinker V24 und 1 Teil Catalyst OL, zu beziehen von Wacker-Chemie GmbH, München). Anschließend wird die LC-Schicht durch UV-Licht mit einer UV_{A}-Dosis von ca. 300-600 mJ/cm² ausgehärtet. Während des gesamten Prozesses wird eine Temperatur von 100 °C beibehalten. Der dabei erhaltene LC-Film zeigt bei orthogonaler Aufsicht eine rote Farbe.

Nach dem Entfernen der Deckfolie wird auf diese erste LC-Schicht wiederum bei 100 °C die 2. LC-Mischung (Mischung 2) durch Rakelauftrag aufgetragen. Durch Wiederholung aller oben genannten Prozeßschritte wird so ein Zweischichtsystem mit einer Gesamtschichtdicke von ca. 12 µm (d.h. 6 µm pro Einzelschicht) erzeugt, das bei orthogonaler Aufsicht eine goldene Farbe (Farbaddition von Rot und Grün) aufweist. Nach dem Entfernen der Deckfolie wird die LC-Doppelschicht mitsamt Trägerfolie durch Umlenken über eine Brechkante (Umlenkradius 0,4 mm) gebrochen. Die entstehenden Rohschollen werden durch Absaugen von der Trägerfolie gewonnen. Die 12 µm dicken LC-Doppelschichten lassen sich so problemlos und vollständig von der Trägerfolie ablösen. Anschließend werden die Rohschollen in einer Ultra-Zentrifugalmühle Typ ZM 100 der Fa. Retsch, Haan, mit eingesetztem Sieb < 80 µm zu Pigmenten zerkleinert.

Die mikroskopische Untersuchung der erhaltenen Pigmente belegt, daß sich die LC-Doppelschichten beim Mahlprozeß vollständig getrennt haben. So zeigen die Pigmente ausnahmslos entweder eine rote oder eine grüne Farbe, je nach der Herkunftsschicht. Zweischichtige, an ihrer goldenen Farbe erkennbare Pigmente sind auch in sehr großen Pigmentproben (>>10.000 einzelne Plättchen) nicht vorhanden.

### Beispiel 1b:

Es wird wie in Beispiel 1a vorgegangen mit dem Unterschied, daß nur eine LC-Mischung (Mischung 2, grün, aus dem Beispiel la) verwendet wird.
Elektronenmikroskopische Aufnahmen (Fig. 7) zeigen, daß ebenso wie im Beispiel 1a ausschließlich einschichtige Plättchen mit einer Schichtdicke von ca. 6 µm erhalten werden.

### Beispiel 1c:

Es wird wie in Beispiel 1b vorgegangen mit dem Unterschied, daß ein Schichtpaket aus vier Schichten aufgebaut wird, dessen Einzelschichten eine Dicke von 4-5 µm haben, so daß eine Gesamtdicke von ca. 18 µm erhalten wird. Auf Grund der erhöhten Gesamtdicke läßt sich das vierschichtige Schichtpaket noch leichter von der Trägerfolie ablösen als das zweischichtige Schichtpaket in den vorangegangenen Beispielen. Elektronenmikroskopische Aufnahmen der gemahlenen Pigmente zeigen, daß ebenso wie in Beispiel 1a und 1b die Plättchen nur aus einer Schicht bestehen.

### Beispiel 1d

Es wird wie in Beispiel 1b vorgegangen mit dem Unterschied, daß eine LC-Mischung, bestehend aus 64 g Hydrochinon-bis-[4-(4-acryloylbutoxy)-benzoat] (erhältlich nach Broer, D. J.; Mol, G. N.; Challa, G. *Makromol. Chem.* 1991, *192,* 59), 36 g Methacrylsäurecholesterinester (erhältlich nach De Visser et al., J. Polym. Sci. A 1(9), 1983 (1971)) 1,00 g Photoinitiator Irgacure® 819 und 0,20 g 2,6-Di-tert.-butyl-4-(dimethylaminomethylen)-phenol (Ethanox® 703, Ethyl Corp., Baton Rouge, LA 70801) eingesetzt wird. Diese Mischung wird mittels eines KPG-Rührers bei 150 °C Ölbadtemperatur homogenisiert bis eine klare Lösung entsteht und danach entsprechend des in Beispiel 1a beschriebenen Prozesses weiterverarbeitet.
Nach dem Mahlprozeß werden grüne Pigmente erhalten. Elektronenmikroskopische Aufnahmen zeigen, daß es sich bei diesen Pigmenten ebenso wie im Beispiel 1a ausschließlich um einschichtige Plättchen mit einer Schichtdicke von ca. 6 µm handelt.

### Beispiel 1e:

Es wird wie in Beispiel 1b vorgegangen mit dem Unterschied, daß eine LC-Mischung, bestehend aus 82,6 g Hydrochinon-bis-[4-(4-acryloylbutoxy)-benzoat] (erhältlich nach Broer, D. J.; Mol, G. N.; Challa, G. *Makromol. Chem.* 1991, *192,* 59), 17,4 g 2,5-Bis-[4-(acryloyloxy)benzoyl]-Isomannid (erhältlich nach dem in Beispiel 4 der Patentanmeldung DE 199 17 067 beschriebenen Verfahren, wobei anstelle des Isosorbids eine äquivalente Menge Isomannid als Edukt eingesetzt wird. Alle übrigen Reaktionsparameter bleiben dabei unverändert), 1,00 g Photoinitiator Irgacure® 819 und 0,20 g 2,6-Di-tert.-butyl-4-(dimethylaminomethylen)-phenol (Ethanox® 703, Ethyl Corp., Baton Rouge, LA 70801) eingesetzt wird. Diese Mischung wird mittels eines KPG-Rührers bei 150 °C Ölbadtemperatur homogenisiert bis eine klare Lösung entsteht und danach entsprechend des in Beispiel 1a beschriebenen Prozesses weiterverarbeitet.

Nach dem Mahlprozeß werden grüne Pigmente erhalten. Elektronenmikroskopische Aufnahmen zeigen, daß es sich bei diesen Pigmenten ebenso wie im Beispiel 1a ausschließlich um einschichtige Plättchen mit einer Schichtdicke von ca. 6 µm handelt.

### Beispiel 2: Herstellung von Plättchen mit cholesterischer Struktur (Pigmenten) aus einem Schichtstapel von 10 Schichten ohne Verwendung einer Deckfolie.

Zwei vernetzbare, flüssigkristalline Materialien mit chiraler Phase, entsprechend DE 199 17 067.3, Beispiel 9, und gemäß DE 199 17 067.3, Beispiel 10, werden mit Hilfe einer Rakel auf eine Glasplatte 20 cm x 20 cm abwechselnd schichtweise aufgetragen. Der Vorgang erfolgt auf einer Heizplatte bei einer Temperatur von 110 °C. Jede Schicht wird sofort nach dem Aufrakeln in einer mit Stickstoff gefüllten Kammer mit einer UV-Handlampe (uvhand 250, Fa. Hönle, Martinsried) vernetzt. Das Schichtpaket wird vom Glasträger bei 20 °C abgelöst. Die REM-Aufnahme (Fig. 8) zeigt ein Schichtpaket, bestehend aus 10 Schichten mit Schichtdicken von 4 bis 10 µm. Das Schichtpaket wird analog Beispiel 1a zerkleinert. Im Mikroskop zeigen sich Plättchen mit grüner und roter Reflexionsfarbe. REM-Aufnahmen dieser gemahlenen Teilchen zeigen, daß ausschließlich Teilchen, die nur aus einer Schicht bestehen, vorliegen.

### Beispiel 3a: Herstellung von Plättchen mit cholesterischer Struktur (Pigmenten) aus einem Schichtpaket mit 148 Schichten unter Verwendung einer siliconisierten Deckfolie

Ein vernetzbares, flüssigkristallines Material (LC-Material) mit chiraler Phase gemäß DE 199 17 067.3, Beispiel 10, wird mit Hilfe einer Apparatur analog Fig. 5, jedoch ohne die Elemente 7 und 8, verarbeitet. Mit einer Rakel (3) wird das Material auf eine rotierende Hartchromwalze (1) aufgetragen. Rakel (3) und Walze (1) sind beheizt. Die Temperatur beträgt ca. 100 °C. Der Abstand zwischen Rakelkante und Walze wird auf 5 µm eingestellt und ein 5 µm dicker LC-Film aufgerakelt. Als Deckfolie zur Glättung des Materials (5) dient eine siliconisierte Folie analog Beispiel 1a. Vernetzt wird mit einer UV_{A}-Lampe (4) (600 mJ/cm² im UV_{A}-Bereich). Nach jeder Umdrehung der Walze wird der Abstand der Rakel um 5 µm vergrößert, so daß auf die vorhandene LC-Schicht eine weitere 5 µm Schicht aufgebracht werden kann. Dieser Beschichtungsvorgang wird 148 mal ausgeführt, so daß ein viellagiges Schichtpaket mit einheitlicher Farbe entsteht. Der Walzenumfang rotiert mit einer Geschwindigkeit von 10 cm/sec. Das zylindrische Schichtpaket, bestehend aus 148 Schichten mit 5 µm Dicke, wird parallel zur Walzenachse eingeschnitten und kann als dickes, frei stehendes Schichtpaket abgehoben werden. Das Schichtpaket wird durch ein Papierschneidegerät in schmale Streifen geschnitten und mit einer Ultra-Zentrifugalmühle Typ ZM 100 der Fa. Retsch, Haan, mit eingesetztem Sieb < 80 µm zu Pigmenten zerkleinert. Eine visuelle Beurteilung im Mikroskop zeigt plättchenförmige Teilchen. REM-Aufnahmen (Fig. 9, Ausschnitt aus dem Schichtpaket u. Fig. 10, Schüttung des Mahlguts) zeigen einheitliche Schichtdicken von 5 µm. Mehrlagige Teilchen konnten nicht festgestellt werden. Die spektralphotometrische Bestimmung der Reflexionsbande ergibt bei den einzelnen Pigmentteilchen einheitliche Werte. Die Bestimmung erfolgt mit einem Zeiss-Mikroskopspektrometer MPM 400.

### Beispiel 3b: Herstellung von Plättchen mit cholesterischer Struktur (Pigmenten) aus einem Schichtpaket mit 1508 Schichten unter Verwendung einer siliconisierten Deckfolie

Es wird wie in Beispiel 3a vorgegangen mit dem Unterschied, daß der Abstand zwischen Rakelkante und Walze auf 1 µm eingestellt ist und ein 1 µm dicker LC-Film aufgerakelt wird. Glättung und Vernetzung erfolgt analog zu Beispiel 3a. Nach jeder Umdrehung der Walze wird der Abstand der Rakel um 1 µm vergrößert, so daß auf die vorhandene LC-Schicht eine weitere 1 µm Schicht aufgebracht werden kann. Dieser Beschichtungsvorgang wird 1508 mal ausgeführt, so daß ein viellagiges Schichtpaket mit einheitlicher Farbe entsteht. Der Walzenumfang rotiert mit einer Geschwindigkeit von 12,5 cm/sec. Das zylindrische Schichtpaket, bestehend aus 1508 Schichten mit 1 µm Dicke, wird parallel zur Walzenachse eingeschnitten und kann als dickes, frei stehendes Schichtpaket abgehoben werden. Das Schichtpaket wird durch ein Papierschneidegerät in schmale Streifen geschnitten und mit einer Rotoplex-Schneidmühle 20/12 (Fa. Hosokawa Alpine Augsburg) mit eingesetztem Sieb <0,8 mm auf <0,8 mm zerkleinert. Die Zerkleinerung zu Pigmenten erfolgte in einer Strahlmahlanlage 100 AFG (Fa. Hosokawa Alpine Augsburg). Das Korngrößenhistogramm, ermittelt mit einem Mastersizer (Malvern Instruments Ltd, Malvern, UK), ergibt eine mittlere Korngröße von 25,6 µm. Eine visuelle Beurteilung im Mikroskop zeigt plättchenförmige Teilchen. Eine REM-Aufnahmen (Fig. 11) an der Schüttung des Mahlguts) zeigt einheitliche Schichtdicken von 1 µm. Die spektralphotometrische Bestimmung der Reflexionsbande ergibt bei den einzelnen Pigmentteilchen einheitliche Werte. Die Bestimmung erfolgt mit einem Zeiss-Mikroskopspektrometer MPM 400.

### Beispiel 4: Herstellung von Plättchen durch kontinuierliche Beschichtung einer Hartchromwalze mit 158 Schichten

Es wird analog Beispiel 3 vorgegangen mit dem Unterschied, daß ein vernetzbares, flüssigkristallines Material mit chiraler Phase, bekannt aus Beispiel 3b von DE 42 40 743 (entsprechend US 5362315) verwendet wird. Es wird ein Schichtpaket, bestehend aus 158 Schichten mit 5 µm Dicke, erhalten. Es wird quer zur Walze eingeschnitten und mit einem an der Walze anliegenden Schaber in großen Schollen abgehoben, ohne daß eine Restbeschichtung auf der Walze zurückbleibt. Die 5 µm-Schichten werden analog Beispiel 1 zerkleinert. Es werden rote Pigmente erhalten. Eine visuelle Beurteilung im Mikroskop zeigt plättchenförmige Teilchen. REM-Aufnahmen einer Schüttung dieser gemahlenen Teilchen zeigen einheitlich einschichtige Pigmente mit Schichtdicken von 5 µm.

### Vergleichsbeispiel 1: Herstellung von Plättchen mit cholesterischer Struktur (Pigmenten) mit nur einer Schicht

### Vergleichsbeispiel 1a:

Es wird gemäß Beispiel 1a vorgegangen, jedoch aus der grünen LC-Mischung eine Einfachschicht von ca. 6 µm hergestellt. Nach dem Entfernen der Deckfolie wird die 6 µm dicke LC-Einfachschicht durch das Umlenken der Trägerfolie über eine Brechkante (Umlenkradius 0,4 mm) gebrochen. Die dabei entstehenden Rohschollen lassen sich jedoch, anders als in den Beispielen 1a-e, nicht allein durch Absaugen von der Trägerfolie entfernen. Durch die in Beispiel 1 beschriebene Vorgehensweise kann weniger als 5% des LC-Films von der Trägerfolie abgelöst werden. Erst durch den Einsatz leistungsfähiger Preßluftdüsen werden auch beim Einschichtverfahren gemäß Stand der Technik Ablöseraten von 90- 95 % erreicht. Dabei sind Preßluftdrücke von ca. 4 bar bei einem Düsendurchmesser von 1,5 mm und einem Düsenabstand von ca. 2 cm erforderlich. Eine vollständige und rückstandsfreie Ablösung wie bei den beschriebenen Doppelschichten ist aber auch mittels Preßluft nicht möglich.

Anschließend werden die erhaltenen Rohschollen in einer Ultra-Zentrifugalmühle Typ ZM 100 der Fa. Retsch mit eingesetztem Sieb < 80 µm zu Pigmenten zerkleinert.

### Vergleichsbeispiel 1b:

Gemäß dem im Vergleichsbeispiel 1a beschriebenen Verfahren wird aus der in Beispiel 1a beschriebenen grünen LC-Mischung ein Flüssigkristallfilm hergestellt, dessen Schichtdicke jedoch nur 4-5 µm beträgt.
Die Reduktion der Schichtdicke führt dazu, daß man die LC-Einfachschichten nach dem Entfernen der Deckfolie nicht mehr durch das Umlenken der Trägerfolie über eine Brechkante mit einem Umlenkradius von 0,4 mm brechen kann. Auch bei einer erheblichen Reduktion des Umlenkradius auf etwa 0,1 mm können bestenfalls vereinzelte Bruchstellen erzeugt werden. Zudem führt der Einsatz einer derart scharfen Brechkante zu deutlichen Beschädigungen der Trägerfolie, was deren Reißen zur Folge haben kann. Der nur 4-5 µm dicke, über weite Strecken nur unvollständig gebrochene LC-Film läßt sich auch unter dem Einsatz von Preßluft bei nochmals gesteigerten Preßluftdrücken von 7-8 bar mit der im Vergleichsbeispiel 1a beschriebenen Preßluftdüse nicht von der Trägerfolie entfernen. Selbst im Bereich von vorhandenen Bruchstellen läßt sich keinerlei Ablösung des LC-Filmes beobachten.

### Beispiel 6: Eigenschaftsprofil der im Mehrschichtverfahren hergestellten Pigmente

Die entsprechend den Beispielen 1b , 1c, 3 und 4 sowie dem Vergleichsbeispiel 1a erhaltenen Flüssigkristallpigmente werden mit einem Klarlack im Verhältnis 1 : 9 Gewichtsteilen gemischt. Als Klarlack wird dabei ein konventionelles Acrylat-Melaminharz-Bindemittelsystem der Fa. Herberts, Wuppertal, für die Kraftfahrzeugreparaturlackierung sowie ein Wasserbasislack (Envirobase T 490 der Fa. PPG) verwendet.
Weder bei der Einarbeitung der Pigmente in die Lacksysteme noch in der Rheologie der pigmentierten Lacke oder bei deren Auftrag durch Spritzen oder Rakeln zeigen sich Unterschiede in der Verarbeitbarkeit zwischen den nach dem erfindungsgemäßen Verfahren hergestellten Pigmenten und den Pigmenten aus dem Vergleichsbeispiel 1a.

Die in der nachfolgenden Tabelle aufgeführten Meßwerte wurden gemäß DE 199 17 067 (US-Serial Number 09/546040), Beispiel 11, ermittelt.

| Beispiel | 1b | 1c | 3a | 3b | 4 | Vergl. bsp 1a |
|---|---|---|---|---|---|---|
| Vernetzungstemperatur (°C) | 100 | 100 | 100 | 100 | 100 | 100 |
| Siebfraktion (µm] | 80 | 80 | 80 | 26** | 80 | 80 |
| WOR* in Wasser (nm) | 505 | 517 | 488 | 496 | 620 | 529 |
| Δ WOR* nach 48 h in Toluol (nm) | 38 | 36 | 34 | | 140 | 38 |
| Halbwertsbreite d. Reflexionsbande (nm) | 74 | 76 | 76 | 100 | 108 | 76 |
| Reflexion (%) | 31 | 28 | 33 | 21 | 19 | 29 |

| | | | | | | |
|---|---|---|---|---|---|---|
| * Wavelength of reflection (Reflexionswellenlänge) | | | | | | |
| ** mittlerer Korndurchmesser nach Strahlmahlung | | | | | | |

## Patentansprüche

1. Verfahren zur Herstellung von Plättchen, bei dem ein zu den Plättchen zu verarbeitendes Material in fließfähigem oder gasförmigem Zustand auf einen Träger aufgetragen, verfestigt, von dem Träger entfernt und einem Brech- oder Mahlprozeß unterzogen wird, **dadurch gekennzeichnet, daß** das Material auf den Träger derart übereinander aufgetragen wird, daß nach dem Auftragen ein Schichtpaket vorliegt, welches im Querschnitt senkrecht zu seiner Oberfläche Einzelschichten einer Dicke zwischen 0,2 - 1000 µm enthält, wobei die Festigkeit des Schichtpakets parallel zum Schichtverlauf größer ist, als senkrecht zum Schichtverlauf, und dieses Schichtpaket nach Ablösen von dem Träger derart behandelt wird, daß das Material in Einzelschichten zerfällt und die Einzelschichten auf eine Teilchengröße von 0,5 - 10000 µm zerkleinert werden.

2. Verfahren nach Anspruch 1, **dadurch gekennzeichnet, daß** das Schichtpaket durch zwei- oder mehrmaliges Auftragen und Verfestigen des zu verarbeitenden Materials hergestellt wird.

3. Verfahren nach Anspruch 1 oder 2, **dadurch gekennzeichnet, daß** als Material polymerisierbare, vernetzbare flüssigkristalline, vorzugsweise cholesterische Materialien eingesetzt werden.

4. Verfahren nach Anspruch 1, 2 oder 3, **dadurch gekennzeichnet, daß** das zu Plättchen zu verarbeitende Material Verbindungen enthält ausgewählt aus der Gruppe Polyester, Epoxide, Vinylester, Vinyläther, Polyurethane, Silane, Siloxane, Silanolate, Wasserglas, Kieselsäureester, flüssigkristalline, polymerisierbare oder vernetzbare aromatische, cycloaliphatische oder heterocyclische Verbindungen, verfilmende Dispersionen, Harzlösungen, verfilmende Dispersionen, Suspensionen, Pulverlacke, durch Sputtern oder Verdampfen aufbringbare Stoffe, polymerisierbare, polyaddierbare, hydrosilylierbare, polykondensierbare, vernetzbare Stoffe, schmelzbare Harze, Thermoplaste, durch Verdampfen von Lösemitteln in Filme überführbare Lösungen, Suspensionen, durch Polymerisation in Zweiphasensysteme überführbare Mischungen.

5. Verfahren nach einem der Ansprüche 1 bis 4, **dadurch gekennzeichnet, daß** das Schichtpaket durch mehrmaligen Auftrag eines zu den Plättchen zu verarbeitenden Materials auf einen Träger in Form einer Trägerfolie ohne Trennmittel oder Trennschicht derart aufgebaut wird, daß es in Form eines Schichtstapels vorliegt.

6. Verfahren nach einem der Ansprüche 1 bis 4, **dadurch gekennzeichnet, daß** das Schichtpaket durch Auftrag des zu Plättchen zu verarbeitenden Materials auf einen Träger in Form eines rotierenden Zylinders aufgebaut wird und in Form eines rollenförmigen oder eines ringförmigen Schichtpakets entsteht.

7. Verfahren nach Anspruch 6, **dadurch gekennzeichnet, daß** das zu Plättchen zu verarbeitende Material auf ein umlaufendes Band aufgetragen wird, anschließend auf einen rotierenden Zylinder übertragen wird, so daß auf dem Zylinder ein Schichtpaket in Form einer Rolle entsteht.

8. Verfahren nach Anspruch 6, **dadurch gekennzeichnet, daß** das zu Plättchen zu verarbeitende Material auf die Innenseite des rotierenden Zylinders aufgetragen wird, so daß auf der Innenseite des Zylinders ein Schichtpaket in Form eines rollenförmigen oder eines ringförmigen Schichtpakets entsteht.

9. Verfahren nach einem der Ansprüche 1 bis 4, **dadurch gekennzeichnet, daß** das Schichtpaket durch ein auf einer Kreisbahn umlaufendes Auftragswerk kontinuierlich erzeugt wird und in Form einer Helix vorliegt.

10. Verfahren nach einem der Ansprüche 1 bis 4, **dadurch gekennzeichnet, daß** das Schichtpaket durch ein sich in einer Ebene vorwärts und rückwärts bewegendes Auftragswerk kontinuierlich erzeugt wird und in Form einer Faltblattstruktur vorliegt.

11. Verfahren nach einem der Ansprüche 1 bis 4 und 7 bis 10, **dadurch gekennzeichnet, daß** das Schichtpaket unter Verwendung eines Trennmittels erzeugt wird.

12. Verfahren nach einem der Ansprüche 1 bis 11, **dadurch gekennzeichnet, daß** der Schichtaufbau in Gegenwart von Flüssigkristalle orientierenden Hilfsstoffen oder elektrischen oder magnetischen Feldern erfolgt.

13. Verfahren nach einem der Ansprüche 1 bis 12, **dadurch gekennzeichnet, daß** die Schichtpakete gegebenenfalls unter Verwendung von Glättungselementen erzeugt werden.

14. Verfahren nach Anspruch 1 - 4 sowie 9 - 13, **dadurch gekennzeichnet, daß** vom Schichtpaket auf der dem Auftragswerk gegenüberliegenden Seite kontinuierlich Schichten abgetragen werden.

15. Verfahren nach einem der Ansprüche 1 bis 14, **dadurch gekennzeichnet, daß** eine Zerkleinerung der Einzelschichten in einem Kollergang, einer Kugelmühle, einer Stiftmühle oder einer Luftstrahlmühle durchgeführt wird und das Material anschließend klassiert wird.

16. Verfahren nach einem der Ansprüche 1 bis 15, **dadurch gekennzeichnet, daß** Materialien mit unterschiedlichen Eigenschaften unmittelbar nacheinander aufeinander aufgebracht werden mit der Maßgabe, daß diese miteinander fest verbundenen Doppel- oder Mehrfachschichten die Einzelschichten des entstehenden Schichtpakets darstellen, die beim Mahlprozeß die gewünschten Plättchen mit der gewünschten Schichtabfolge liefern.

## Claims

1. Method of producing platelets, wherein a material to be processed into platelets is applied in a flowable or gaseous state to a substrate, is consolidated, removed from the substrate and subjected to a crushing or grinding process, **characterized in that** the material is applied to the substrate in such a way on top of itself, that after said application a lamina pack is present which in its cross section perpendicular to its surface has individual laminae of a thickness of between 0.2 - 1000 µm, the mechanical strength of the lamina pack parallel to the course of the laminae being greater than perpendicular to the course of the laminae and said lamina pack, having been stripped from the substrate, is treated in such a way that the material disintegrates into individual laminae and the individual laminae are reduced in size to a particle size of 0.5 - 10 000 µm.

2. Method according to Claim 1, **characterized in that** the lamina pack is prepared by the material to be processed being applied and consolidated two or more times.

3. Method according to Claim 1 or 2, **characterized in that** the material used comprises polymerizable, crosslinkable liquid-crystalline, preferably cholesteric materials.

4. Method according to Claim 1, 2 or 3, **characterized in that** the material to be processed into platelets comprises compounds selected from the group consisting of polyesters, epoxides, vinyl esters, vinyl ethers, polyurethanes, silanes, siloxanes, silanolates, water glass, silicic acid esters, liquid-crystalline, polymerizable or crosslinkable aromatic, cycloaliphatic or heterocyclic compounds, film-forming dispersions, resin solutions, suspensions, powder paints, substances which can be applied by sputtering or vapour deposition, polymerizable, polyaddable, hydrosilylable, polycondensable, crosslinkable substances, fusible resins, thermoplasts, solutions which can be converted into films by the evaporation of solvents, suspensions, mixtures which can be converted into two-phase systems by polymerization.

5. Method according to any one of Claims 1 to 4, **characterized in that** the lamina pack is built up in such a way by repeated application of a material to be processed into the platelets onto a substrate in the form of a substrate sheet without a release agent or release layer, that it is present in the form of a lamina pack.

6. Method according to any one of Claims 1 to 4, **characterized in that** the lamina pack is built up by application of the material to be processed into platelets onto a substrate in the form of a rotating cylinder and is released in the form of a roll-shaped or an annular lamina pack.

7. Method according to Claim 6, **characterized in that** the material to be processed into platelets is applied to a revolving belt and is then transferred to a rotating cylinder, so that a lamina pack in the form of a roll is produced on the cylinder.

8. Method according to Claim 6, **characterized in that** the material to be processed into platelets is applied to the inside of the rotating cylinder, so that a lamina pack in the form of a roll-shaped or an annular lamina pack is produced on the inside of the cylinder.

9. Method according to any one of Claims 1 to 4, **characterized in that** the lamina pack is produced continuously by an applicator mechanism revolving in a circular orbit and is present in the form of a helix.

10. Method according to any one of Claims 1 to 4, **characterized in that** the lamina pack is produced continuously by an applicator mechanism moving back and forth in a plane and is present in the form of a folded-leaf structure.

11. Method according to any one of Claims 1 to 4 and 7 to 10, **characterized in that** the lamina pack is produced with the use of a release agent.

12. Method according to any one of Claims 1 to 11, **characterized in that** the build-up of the laminae takes place in the presence of auxiliaries which align liquid crystals or of electric or magnetic fields.

13. Method according to any one of Claims 1 to 12, **characterized in that** the lamina packs are optionally produced with the use of smoothing elements.

14. Method according to Claims 1 - 4 and 9 - 13, **characterized in that** laminae are continuously removed from the lamina pack on the side opposite the applicator mechanism.

15. Method according to any one of Claims 1 to 14, **characterized in that** size reduction of the individual laminae is carried out in an edge mill, a ball mill, a pin mill or an air-jet mill, and the material is then classified.

16. Method according to any one of Claims 1 to 15, **characterized in that** the materials having different characteristics are applied on top of one another immediately after one another, with the proviso that these double or multiple laminae bonded firmly together represent individual laminae of the lamina pack being formed which, during the grinding process, afford the desired platelets having the desired laminar sequence.

## Revendications

1. Procédé pour la fabrication de plaquettes, dans lequel un matériau à transformer en plaquettes est appliqué dans un état pouvant s'écouler ou gazeux sur un support, solidifié, éliminé du support et soumis à un procédé de concassage ou de broyage, **caractérisé en ce que** le matériau est appliqué l'un sur l'autre sur le support de telle manière qu'après l'application, on est en présence d'un paquet de couches qui comprend dans la section perpendiculaire par rapport à sa surface des couches individuelles d'une épaisseur entre 0,2 et 1000 µm, la résistance du paquet de couches étant supérieure parallèlement au sens des couches que perpendiculairement par rapport au sens des couches et ce paquet de couches étant traité après l'enlèvement du support de telle manière que le matériau se décompose en couches individuelles et que les couches individuelles sont broyées en une grosseur de particules de 0,5 à 10000 µm.

2. Procédé selon la revendication 1, **caractérisé en ce que** le paquet de couches est fabriqué par une application et une solidification double ou multiple du matériau à transformer.

3. Procédé selon la revendication 1 ou 2, **caractérisé en ce qu'**on utilise comme matériau des matériaux polymérisables, réticulables, à cristaux liquides, de préférence cholestériques.

4. Procédé selon la revendication 1, 2 ou 3, **caractérisé en ce que** le matériau à transformer en plaquettes contient des composés choisis parmi le groupe constitué des polyesters, des époxydes, des esters de vinyle, des vinyléthers, des polyuréthanes, des silanes, des siloxanes, des silanolates, du verre soluble, des esters de silice, des composés à cristaux liquides, polymérisables ou réticulables, aromatiques, cycloaliphatiques ou hétérocycliques, des dispersions formant un film, des solutions de résine, des dispersions formant un film, des suspensions, des laques de poudre, des substances pouvant être appliquées par pulvérisation ou évaporation, des substances polymérisables, pouvant subir une polyaddition, une hydrosilylation, une polycondensation, une réticulation, des résines fusibles, des thermoplastiques, des solutions, des suspensions pouvant être transformées en films par évaporation de solvants, des mélanges transformables par polymérisation en systèmes à deux phases.

5. Procédé selon l'une quelconque des revendications 1 à 4, **caractérisé en ce que** le paquet de couches est construit par une application multiple d'un matériau à transformer en plaquettes sur un support sous forme d'une feuille support sans agent de séparation ni couche de séparation de telle manière qu'il se trouve sous forme d'un tas de couches.

6. Procédé selon l'une quelconque des revendications 1 à 4, **caractérisé en ce que** le paquet de couches est construit par application du matériau à transformer en plaquettes sur un support sous forme d'un cylindre en rotation et est formé sous forme d'un paquet de couches en forme de rouleau ou d'anneau.

7. Procédé selon la revendication 6, **caractérisé en ce que** le matériau à transformer en plaquettes est appliqué sur une bande en circulation, est ensuite transféré sur un cylindre en rotation, de telle manière qu'il se forme sur le cylindre un paquet de couches en forme d'un rouleau.

8. Procédé selon la revendication 6, **caractérisé en ce que** le matériau à transformer en plaquettes est appliqué sur la face interne du cylindre en rotation, de telle manière qu'il se forme sur la face interne du cylindre un paquet de couches sous forme d'un paquet de couches en forme de rouleau ou d'anneau.

9. Procédé selon l'une quelconque des revendications 1 à 4, **caractérisé en ce que** le paquet de couches est produit en continu par un mécanisme d'application suivant un tracé circulaire et se trouve sous forme d'une hélice.

10. Procédé selon l'une quelconque des revendications 1 à 4, **caractérisé en ce que** le paquet de couches est produit en continu par un mécanisme d'application se déplaçant vers l'avant et vers l'arrière dans un plan et se trouve sous forme d'une structure de feuille pliée.

11. Procédé selon l'une quelconque des revendications 1 à 4 et 7 à 10, **caractérisé en ce que** le paquet de couches est produit avec utilisation d'un agent de séparation.

12. Procédé selon l'une quelconque des revendications 1 à 11, **caractérisé en ce que** la construction à couches est réalisée en présence d'adjuvants ou des champs électriques ou magnétiques orientant les cristaux liquides.

13. Procédé selon l'une quelconque des revendications 1 à 12, **caractérisé en ce que** les paquets de couches sont le cas échéant produits en utilisant des éléments de lissage.

14. Procédé selon les revendications 1 à 4 ainsi que 9 à 13, **caractérisé en ce que** des couches sont évacuées en continu du paquet de couches du côté opposé au mécanisme d'application.

15. Procédé selon l'une quelconque des revendications 1 à 14, **caractérisé en ce qu'**un broyage des différentes couches est réalisé dans un broyeur à meules, un broyeur à billes, un broyeur à broches ou un broyeur à jet d'air et le matériau est ensuite classé.

16. Procédé selon l'une quelconque des revendications 1 à 15, **caractérisé en ce que** des matériaux avec des propriétés différentes sont appliqués directement l'un après l'autre, l'un sur l'autre sous réserve que ces couches doubles ou multiples reliées solidement les unes aux autres forment les différentes couches du paquet de couches qui se forme, qui forment lors du processus de broyage les plaquettes souhaitées, avec la succession de couches souhaitée.
